# EUROPEAN PATENT APPLICATION

(11) **EP 2 019 371 A1**
(43) Date of publication of application: **28.01.2009**
(21) Application number: 08161116.2
(22) Date of filing: 24.07.2008
(51) Int. Cl.: G06Q 10/00, G05B 19/418, G06F 17/50

(54) **Three-dimensional process planning**

(30) Priority: 25.07.2007 US 828256
(71) Applicant: The Boeing Company, Chicago, IL 60606-2016 (US)
(72) Inventor: Bouffiou, Carl E., Tacoma, WA 98407 (US); Hlavacek, William J., Seattle, WA 98136 (US); Franzen, Steven E., St Charles, MO 63304 (US); Schreiber, Robert J., St Louis, MO 63122 (US); Anelle, Joe, St Charles, MO 63304 (US); LeDosquet, David Q., Kent, WA 98031 (US); Zayic, Jerry D., Renton, WA 98058-6613 (US); Frazier, Gerald S., Kent, WA 98031 (US)
(74) Representative: Howson, Richard G.B.

(57) **Abstract**

Systems and methods are described for three-dimensional process planning. In one embodiment, one or more manufacturing requirements are received, and an authoritative three-dimensional (3D) computer-aided design (CAD) model of a component is generated or selected. A sub-process associated with the authoritative 3D CAD model of the component is generated based on the one or more manufacturing requirements. The authoritative 3D CAD model of the component is associated with the sub-process using a product-to-process relationship, and the sub-process (or the product-to-process relationship) is included into a process plan. The authoritative 3D CAD model of the component is displayed in a display of a 3D definition of the product in accordance with the product-to-process relationship.

## Description

### FIELD OF THE INVENTION

The field of the present disclosure relates to systems and methods for three-dimensional process planning, and more specifically, to systems and methods that enable the creation of process plans that directly use authoritative three-dimensional (3D) computer-aided design (CAD) models of products and resources whose authoritative definition collectively defines the context and content of process plans that enable concurrent and collaborative product, process and resource definition to mature as an integrated complete state.

### BACKGROUND

Production environments that assemble large complex systems, such as large aircraft, typically require the integration of thousands of parts and multiple assembly tools and require thousands of assembly process plans that communicate the design requirements and manufacturing assembly requirements to affected product, process and resource designers and assembly mechanics. Adding to the intricacy of these types of environments is the functional diversity of the design and manufacturing disciplines (e.g. structural, electrical, hydraulic, etc.) defining the parts, plans and tools which must be used to assemble the product components into the final complex product.

Traditional process planning systems may be "bill of material" based systems. Bill of material based systems are typically not well integrated with the product design geometry, which may be documented in a two dimensional (2D) drawing or in a computer aided design (CAD) system. For such systems, a process designer may be required to review the shape definitions of parts and assemblies from a 2D drawing or CAD system, and manually interpret or correlate the shape definitions to a bill of material in order to gain an understanding of the product configuration and the impact to one or more process plans in an overall manufacturing plan for the assembly of the complex product. The process designer may then manually (or mentally) formulate the assembly sequence, including subassembly, to support manufacturing requirements for his / her discipline in order to appropriately assign the part identifier (part number) to a process plan.

Since the process plans may be authored by multiple groups of process designers (e.g. each aligned to a different functional design discipline), the process designer may be required to have an understanding of the interdependencies between the various process planning disciplines (often accomplished via "tribal" knowledge or via issues discovered in production, after process plan authoring) to properly assess impact and initiate the necessary process plan adjustments. The integration of process plans among multiple process planning groups can be a significant challenge since there is typically specific discipline knowledge and limited access to the product, process and resource data captured by diverse groups. Reliance on manual correlation between design geometry, bill of material and process plans is also prone to error and may not effectively capture or communicate the intent of the process design due to the required translation and understanding of product requirements. Such errors may lead to product changes after release, process plan changes, changes to tooling, and other costly impacts on the production process. In addition, typical reviews of the product design for producibility are accomplished without the knowledge of how the product will be assembled and the effects of the assembly environment and constraints, such as technician access and sequence analysis, on the design of the product.

Moreover, when any of the product requirements are updated by the product designer, the process designer must review the product revision and update the process to be in sync with these changes. These types of changes are typically to the attributes or effectivity of the product and do not impact the process plan but require the process designer to update the process plan to reflect the current change.

### SUMMARY

The present disclosure is directed to three-dimensional process planning using authoritative three-dimensional (3D) computer-aided design (CAD) product and resource definitions for creating process plans. Techniques in accordance with the present disclosure may advantageously provide improved capabilities to perform process planning, assess planning alternatives, and assess changes to product and resource designs using authoritative 3D CAD models in a virtual environment, at reduced cost in comparison with prior art process planning systems. In addition, the product definition available to the process plan may be automatically kept up to date via product-to-process relationships, continuously shared with multiple disciplines showing an integrated view of diverse discipline assembly definition, and used to review the product in context of the assembly process plan, enabling accurate and relevant analysis of the product in an assembly state to be performed and allowing comprehensive producibility reviews to be executed.

In one embodiment, a method of process planning for manufacturing a product includes: receiving one or more manufacturing requirements; at least one of generating and selecting an authoritative three-dimensional (3D) computer-aided design (CAD) model of a component of the product; generating a sub-process associated with the authoritative 3D CAD model of the component based on the one or more manufacturing requirements; associating the authoritative 3D CAD model of the component with the sub-process using a product-to-process relationship, the product-to-process relationship being configured such that a variation of the sub-process results in an approximately simultaneous corresponding variation on the authoritative 3D CAD model; including at least one of the sub-process and the product-to-process relationship into a process plan; and displaying the authoritative 3D CAD model of the component in a display of a 3D definition of the product in accordance with the product-to-process relationship. These product-to-process relationships consist of a database object which keeps the latest version of the product associated and available to the process plan and those accessing the process, product and resource data.

In another embodiment, a method of process planning includes: receiving a set of requirements; at least one of generating and selecting one or more authoritative component models; generating at least one sub-process associated with the one or more authoritative component models based on the set of requirements; associating the one or more authoritative component models with the at least one sub-process using at least one product-to-process relationship, the at least one product-to-process relationship being configured such that a variation of the at least one sub-process results in an approximately simultaneous corresponding variation on the one or more authoritative 3D CAD models; including at least one of the at least one sub-process and the at least one product-to-process relationship into a process plan; and displaying the one or more authoritative component models in a display in accordance with the at least one product-to-process relationship.

In yet another embodiment, a system for process planning includes a processing component; a display operatively coupled to the processing component; and a memory operatively coupled to the processing component. The memory contains instructions readable by the processing component and configured such that, when executed by the processing component, the processing component: receives one or more requirements; enables at least one of generation and selection of one or more authoritative component models; enables generation of at least one sub-process associated with the one or more authoritative component models based on the one or more requirements; enables association of the one or more authoritative component models with the at least one sub-process using at least one product-to-process relationship, the at least one product-to-process relationship being configured such that a variation of the at least one sub-process results in an approximately simultaneous corresponding variation on the one or more authoritative component models; enables inclusion of at least one of the at least one sub-process and the at least one product-to-process relationship into a process plan; and displays the one or more authoritative component models in a display in accordance with the at least one product-to-process relationship.

The features, functions, and advantages that have been discussed can be achieved independently in various embodiments of the present invention or may be combined in yet other embodiments further details of which can be seen with reference to the following description and drawings.

### BRIEF DESCRIPTION OF THE DRAWINGS

Embodiments of systems and methods in accordance with the teachings of the present disclosure are described in detail below with reference to the following drawings.

Figure 1 is an exemplary environment for implementing systems and methods for three-dimensional process planning for manufacturing a product in accordance with the present disclosure;

Figure 2 is an exemplary method for three-dimensional process planning in accordance with another embodiment of the invention;

Figure 3 shows an exemplary user interface of a process planning system in accordance with an embodiment of the present disclosure;

Figures 4-6 show various product-to-process relationships and corresponding phases of assembly of the process plan of Figure 3;

Figure 7 is a schematic representation of a relationship of cost and ability to change a product design as a function of product life cycle; and

Figure 8 illustrates a computing device configured in accordance with another embodiment of the present disclosure.

### DETAILED DESCRIPTION

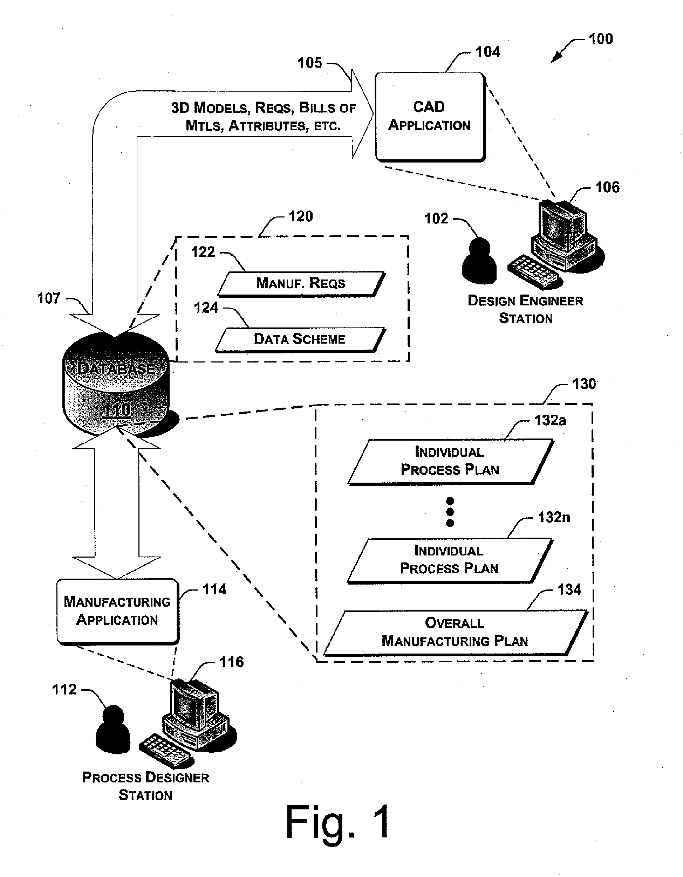

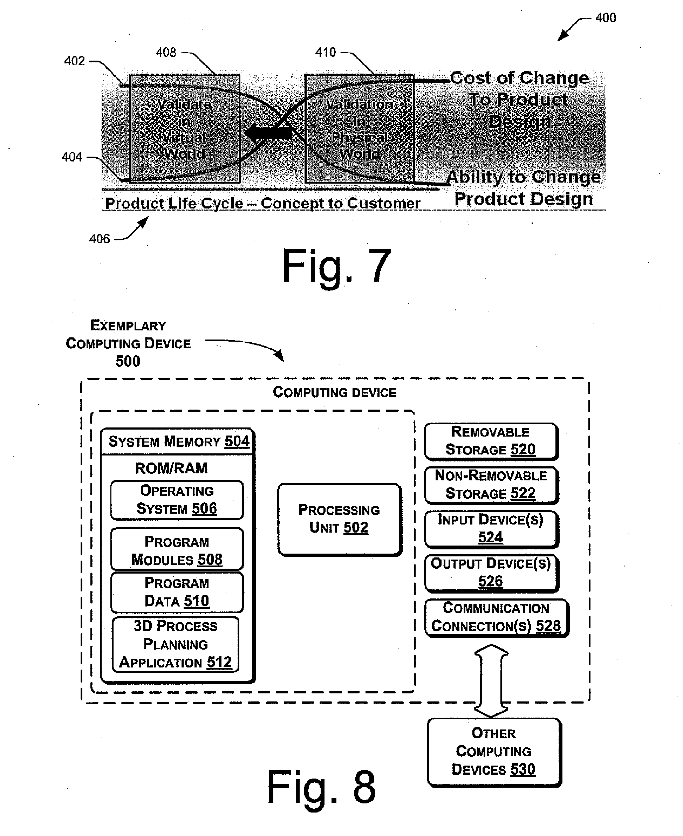

The present disclosure teaches systems and methods for three-dimensional process planning. Many specific details of certain embodiments of the invention are set forth in the following description and in Figures 1-8 to provide a thorough understanding of such embodiments. One skilled in the art, however, will understand that the invention may have additional embodiments, or that the invention may be practiced without several of the details described in the following description.

In general, embodiments of three-dimensional process planning systems and methods in accordance with the present disclosure use authoritative three-dimensional (3D) computer-aided design (CAD) product and resource definitions in a manufacturing computing environment for creating process plans. Such embodiments allow the creation and analysis of process plans via graphic depictions of the assembly context and sequence.

As used herein, the term "process plan" includes a logical unit of work used to communicate information, such as product design and manufacturing assembly requirements, to personnel involved in design and manufacturing operations, including, for example, shop floor personnel who will perform assembly or inspection tasks. The unit of work represented in such a process plan may not produce a completed product as such, but rather, may complete a subset of the product manufacturing process. Also, the term "manufacturing plan" is used herein to refer to a grouping of process plans, and may also include products produced via a supply chain, which are integrated and sequenced to produce a complex product, such as a large aircraft, in compliance with product design and manufacturing requirements. Finally, the term "product-to-process relationship" is used to refer to database object that is configured to maintain the latest version of the product associated and available to the process plan, and to those accessing the process, product and resource data, such as various process designers from a variety of technical design teams.

Embodiments of the present disclosure allow a process designer to assign authoritative 3D models of product components, parts, and sub-components directly to a process plan, and to define the assembly sequence during 3D product assignment. As used herein, the term "authoritative" means that the 3D models are not mere illustrative or pictorial representations of components, parts, or sub-components, but rather, are accurate 3D CAD representations that correspond to the physical components, and which may be manipulated or operated upon by the designer 102. These authoritative 3D model definitions are the product authority which defines the product authorized by the product designer as the configuration of the component to be assembled or installed. The authoritative 3D models may have associated therewith one or more product-to-process relationships that may be created or selected by the process designer during creation of an individual process plan. Thus, embodiments of the present disclosure provide the capability to assign authoritative 3D product design definitions, which may include bill of material data elements, directly to the process plan.

Figure 1 is an exemplary environment 100 for implementing systems and methods for three-dimensional process planning for manufacturing a product in accordance with one embodiment of the present disclosure. In this embodiment, a designer (or design engineer) 102 employs a CAD application 104 implemented on a design station 106. The CAD application 104 is operatively coupled to a database 110. The database 110 could be a single logical or physical source of data, or alternately, could be distributed over a plurality of logical or physical data sources. A manufacturing engineer (or other suitable user) 112 operates a manufacturing application 114 installed on a manufacturing engineering workstation 116. The manufacturing application 114 operatively communicates with the database 110.

As further shown in Figure 1, in this embodiment, the database 110 includes common design information 120 and common plan information 130 that may be accessed and used by various entities throughout the environment 100. The common design information 120 includes manufacturing requirements data 122 and data scheme information 124. The data scheme information 124 may include information that promotes consistency between the results output by the designer 102 using the CAD application 104 and the results of other process designers assigned to different functional design disciplines. The common plan information 130 includes individual process plans 132a-n, and an overall manufacturing plan 134.

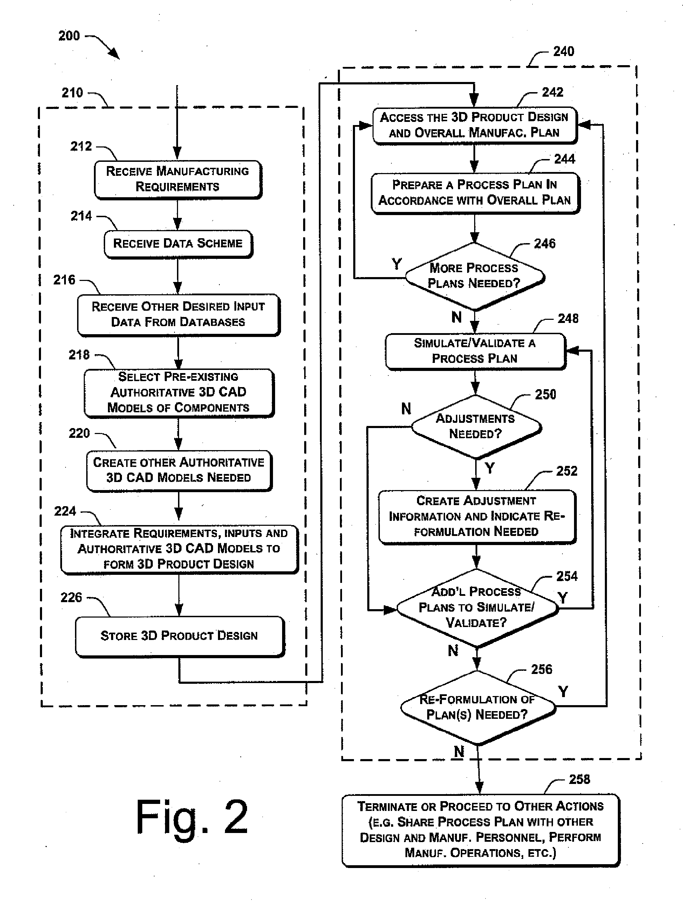

Figure 2 is an exemplary method 200 for three-dimensional process planning in accordance with another embodiment of the invention. The method 200 is illustrated as a collection of blocks in a logical flow graph, which represents a sequence of operations that can be implemented in hardware, software, or a combination thereof. In the context of software, the blocks represent computer instructions that, when executed by one or more processors, perform the recited operations. For purposes of discussion, the method 200 is described with reference to the components of the exemplary environment 100 described above with reference to Figure 1.

In this embodiment, the method 200 generally includes a product design portion 210 and a process planning portion 240. In the product design portion 210, the design engineer 102 uses the CAD application 104 to generate a product design. Similarly, in the process planning portion 240, the process designer 112 creates one or more individual process plans 132. The process plans 132 may, for example, specify how a particular component is assembled, prepared, and integrated with other components during formation of a complex product being manufactured in accordance with, and as part of, the overall manufacturing plan 134. Alternately, one or more of the process plans 132 may involve maintenance, repair, inspection, upgrade, or any other suitable operations that may be involved in manufacturing a product, or that may be involved in performing operations on or with an existing product.

As shown in Figure 2, in the product design portion 210, the designer 102 may use the CAD application 104 to receive input data 105 (Figure 1) from the database 110. More specifically, at 212, the CAD application 104 may receive the manufacturing requirements 122, and may receive the data scheme information 124 at 214. The CAD application 104 may also receive various other input data 105 stored within the database at 216, including, for example, bills of materials, standard (or non-standard) attributes and requirements, and any other suitable data or information.

At 218, the designer 102 may also use the CAD application 104 to draw upon pre-existing authoritative 3D models. For example, in the context of manufacturing large commercial aircraft, possible authoritative 3D models that may be stored for process planning include structural components, such as fuselage sections, bulkheads, frames, wing sections, landing gear sections, crew platforms, lavatories, galleys, cockpits, and any other suitable components. At 220, the designer 102 may use the CAD application 104 to create any other authoritative 3D CAD models that may be needed for the 3D product design. At 222, any such newly-generated information (e.g. authoritative 3D CAD models, bills of materials, attributes, requirements, etc.) may be transmitted as output data 107 (Figure 1) and stored in the database 110 for possible future use.

At 224, the designer 102 uses the CAD application 104 to integrate the various inputs 105 (e.g. manufacturing requirements 122, data scheme information 124, other inputs, authoritative 3D models, etc.) to produce the 3D product design. The 3D product design may then be stored in the database 110 at 226.

As further shown in Figure 2, in the process planning portion 240, the method 200 accesses the 3D product design and the overall manufacturing plan at 242. At 244, an individual process plan 132 is prepared in accordance with the 3D product design and the overall manufacturing plan 134. The process plan 132 prepared at 244 is typically composed of various sub-processes that are defined, developed, or selected by the process designer.

The development of the process plan at 244 also includes definition of a product-to-process relationship between the various sub-processes and the associated components of the 3D CAD product design. As noted above, the product-to-process relationships may be configured to maintain the latest version of the product associated and available to the process plan, and to those accessing the process, product and resource data, such as various process designers from a variety of technical design teams. More specifically, each product-to-process relationship is configured such that a variation of the sub-process results in an approximately simultaneous corresponding variation on the authoritative 3D CAD model. In some embodiments, the product-to-process relationships are database objects that persistently and authoritatively relate the sub-process to the authoritative 3D CAD model.

It will be appreciated that for some sub-processes and corresponding components of the authoritative 3D product design, pre-existing product-to-process relationships may already exist within the database 110 (at 244), and the process designer 112 may access such product-to-process relationships when generating the process plan at 244. Alternately, the process designer 112 may develop an entirely new process plan, or may begin with a pre-existing product-to-process relationship or process plan, and modify it to achieve a new process plan.

At 246, a determination is made whether additional process plans need to be created. If so, then the method 200 returns to 242 and repeats the above-referenced activities (242-246) of the process planning portion 240 as needed to create the additional process plans.

When no additional process plans are needed (at 246), then the method 200 may simulate or validate (or attempt to simulate or validate) a process plan at 248. At 250, the method 200 determines whether, based on the simulation or validation of the process plan, adjustments to the individual process plan should be made. If so, then information regarding the desired adjustment(s) to the process plan 132 is created at 252, including an indication that a re-formulation of the individual process plan 132 is desired. After the re-formulation information is created (at 252), or after determining that re-formulation is not needed (at 250), the method 200 may determine whether it is appropriate to simulate or validate additional process plans at 254. If so, the method 200 returns to 248 of the process planning portion 240 and repeats the above-described activities 248-254 as needed. This iterative process may be repeated until there are no additional process plans to simulate or validate.

Next, the method 200 determines whether re-formulation of any process plans is needed at 256. If so, then the method 200 returns to 242 of the process planning portion 240, and the adjustment information created at 252 is taken into consideration during re-formulation of the process plan(s) in the process planning portion 210. Alternately, if it is determined that re-formulation of any process plans is not needed, then the method 200 terminates or proceeds to other actions at 258, such as, for example, sharing the process plan information with other personnel involved in design and manufacturing activities, analyzing the process plan for resource allocation, planning, or improvements, or actually performing the manufacturing activities specified in the process plan.

In some embodiments, the 3D product design may contain, or link to, all information (or a portion of information) about the components or the final product, including but not limited to part identifier, material, required specifications for processing, attribute data, and any other desired information. Such capability enables the 3D process planning system (or process designer 112) to capture the correlation of the product design requirements accurately and effectively, and in a manner that is interrelated with the individual process plans 132 and the overall manufacturing plan 134. More specifically, using the 3D process planning system 100 (Figure 1), the process designer 112 is able to display the 3D product design, develop the individual process plans 132, and computationally simulate each individual process plan 132 to visually confirm the relationship of a product component to a corresponding process plan 132. The system 100 also enables the process designer 112 confirm the operability of a process plan 132, and to analyze the product component's impact on the assembly sequence in the process plan 132, and in the overall manufacturing plan 134.

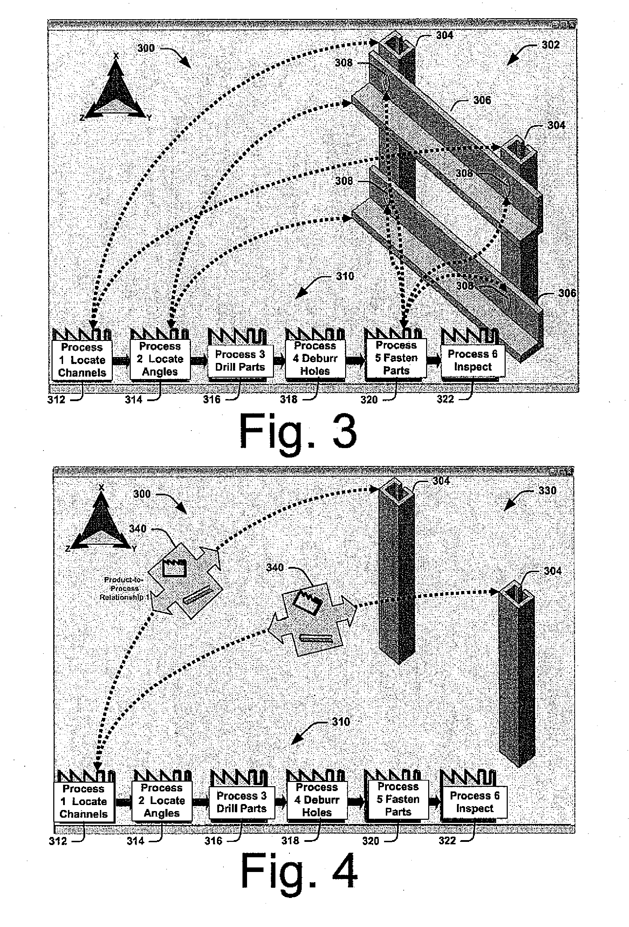

For example, Figure 3 shows an exemplary user interface 300 of a process planning system in accordance with an embodiment of the present disclosure. In this embodiment, the user interface 300 displays an authoritative 3D product design 302 that includes a plurality of channels 304 and a plurality of angles 306. A plurality of holes (not visible) are formed at the intersections of the channels 304 and the angles 306 for a corresponding plurality of fasteners 308.

The user interface 300 also displays a process plan 310 that includes a plurality of product-to-process relationships (or sub-processes). The process plan 310 is linked to the 3D product design 302 such that as the authoritative 3D product design 302 is developed, the process plan 310 is created. Thus, as the process designer develops or selects the product design 302, corresponding sub-processes are added to the process plan 310.

For example, in the embodiment shown in Figure 3, when the process designer 112 positions or locates the channels 304, a "locate channels" sub-process 312 is added to the process plan 310, and when the angles 306 are positioned or located, a "locate angles" sub-process 314 is added to the process plan 310. Next, the process designer 112 specifies the formation of the holes at the intersections of the channels 304 and angles 306 by adding a "drill parts" sub-process 316 to the process plan 310. The process designer 112 also adds a "deburr holes" sub-process 318 and a "fasten parts" sub-process 320 to the process plan 310 to complete the assembly of the product design 302. An "inspect" sub-process 322 may then be added to complete the process plan 310 associated with the product design 302.

Via user interfaces (such as the user interface 300), embodiments of the present disclosure enable users (e.g. process designer) to perceive the correlation of the product design requirements accurately and effectively, and to understand the interrelatedness of the various process plans 310 with each other and with the overall manufacturing plan 134. By displaying the 3D CAD models 330 associated to selected processes 312 of the process plan 310, the user interface 300 allows the user to visually confirm the relationship of a component to a corresponding process plan 132, and to the overall manufacturing plan 134, thereby enabling improved definition of process plans for complex product manufacturing.

More specifically, Figures 4 through 6 show various product-to-process relationships (and corresponding phases of assembly of the product 302) of the process plan 310 of Figure 3. As shown in Figure 4, in a first phase 330 of assembly of the product 302, when the "locate channels" sub-process 312 is selected, a first product-to-process relationship 340 that persistently and authoritatively exists between the "locate channels" sub-process 312 and the channels 304 is invoked, thereby accurately and authoritatively positioning the channels 304 within the user interface 300. A user may therefore analyze and understand the relationship between the "locate channels" sub-process 312 and the first phase 330 of assembly of the product 302.

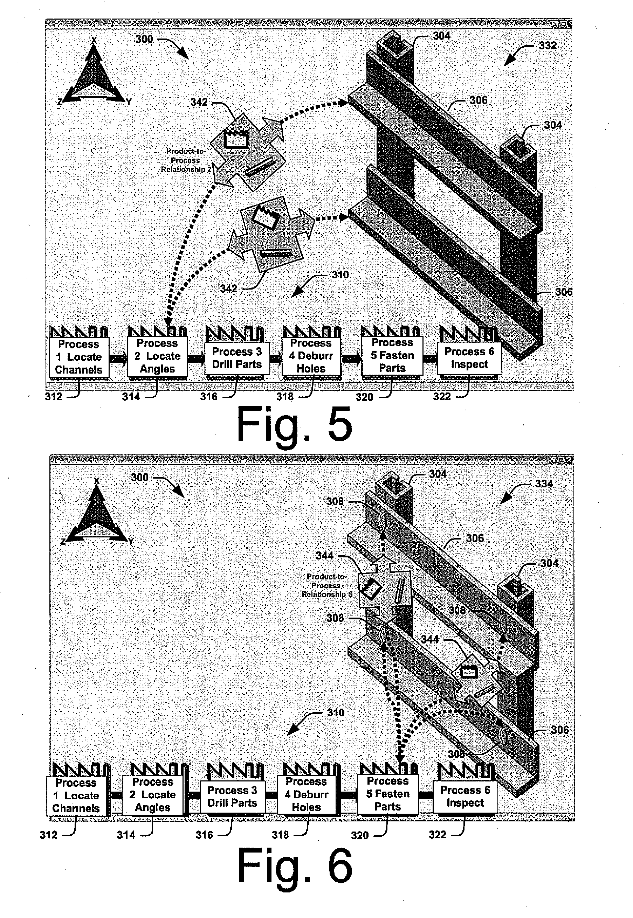

Similarly, Figure 5 depicts a second phase 332 of assembly of the product 302 that occurs when the "locate angles" sub-process 314 is selected. A second product-to-process relationship 342 authoritatively and persistently relates the "locate angles" sub-process 314 to the angles 306 and the other components of the second phase 332 of assembly. As shown in Figure 6, in a fifth phase 334 of assembly of the product 302, a fifth product-to-process relationship 344 relates the "fasten parts" sub-process 320 with the corresponding portions of the product 302, including the fasteners 308, the holes, the angles 306, and the channels 304. In this way, the user may visually analyze and understand the sub-processes 312-322 of the process plan 310, and their corresponding relationship to the various phases of assembly of the product, through the persistent and authoritative product-to-process relationships.

Embodiments of systems and methods in accordance with the present disclosure may provide considerable advantages over the prior art. For example, Figure 4 generally depicts an ability to change a product design 402 and a cost of change to product design 404 as a function of product life cycle 406. The product life cycle (or concept to customer) 406 timeline includes a first portion 408 wherein validation of product changes may occur primarily in a virtual environment, and a second portion 410 wherein validation of product changes may primarily occur in a physical environment.

Embodiments of the present disclosure advantageously provide improved capabilities to perform and assess changes to product designs while still in the first portion 408 of the product life cycle 406. Validation of changes in the virtual environment 408 advantageously allows changes to product designs to be assessed and implemented more readily, and at reduced cost, in comparison with other process planning systems.

Furthermore, process planning techniques in accordance with the teachings of the present disclosure allow access to the product definition in any state of maturity, and the ability to associate it to the process plan for "producibility" analyses and process design feedback to the product designer. The association of the authoritative 3D product definition to the process plan, when saved, may be made available for all users (e.g. multiple process planning groups) with access to the system. Users can review the state of the product components (which may or may not be released), visualize the assembly sequence to gain valuable understanding of the process plan intent, and more efficiently analyze the impact of changes to a process plan or the overall manufacturing plan.

Embodiments of the present disclosure may provide improved capabilities for the combined intent of the product designer and the process designer to be captured and documented via the process plan and the relationships to the 3D design definition for any user with appropriate system access to see. Because the intent is captured using 3D design definitions, communication of the intent to multi-lingual users is facilitated by reduced dependence on textual modes of communication.

Embodiments of the present disclosure integrate capabilities of various applications (e.g. CAD, Process Planning, etc.) so that authoritative 3D product design definitions may be used in the context of a process plan, allowing the process plans to be kept up to date with the latest component design changes. Substantially improved capabilities are provided over prior art solutions that require manually entered references to the authoritative product design definition, which is accessed via other applications and/or via paper or Mylar reproduction in 2D format, or that rely on manual methods of cross-referencing or the use of non-authoritative graphic representations.

It will be appreciated that embodiments of systems and methods in accordance with the present disclosure may be implemented in a variety of hardware systems. For example, Figure 5 illustrates a computing device 500 configured to operate in accordance with an embodiment of the present disclosure. The computing device 500 may be used, for example, as the design station 106, or the manufacturing engineering workstation 116, of the environment 100 of Figure 1.

In this embodiment, the computing device 500 includes at least one processing unit 502 and system memory 504. Depending on the exact configuration and type of computing device 500, the system memory 504 may be volatile (such as RAM), nonvolatile (such as ROM and flash memory) or some combination of the two. The system memory 504 typically includes an operating system 506, one or more program modules 508, and may include program data 510.

As further shown in Figure 5, a 3D process planning application 512 that is configured to operate in accordance with the teachings of the present disclosure may also be stored in the system memory 504. In alternate embodiments, the 3D process planning application 512 may be partially (or wholly) implemented in hardware or firmware, or may be stored in other memory (e.g., removable storage 520, non-removable storage 522, etc.) separate from the system memory 504. In still other embodiments, the 3D process planning application 512 may be distributed throughout various portions of the environment 100 (Figure 1).

The computing device 500 may have additional features or functionality. For example, the computing device 500 may also include additional data storage devices (removable and/or non-removable) such as, for example, magnetic disks, optical disks, or tape. Such additional storage is illustrated in Figure 5 by removable storage 520 and non-removable storage 522. Computer storage media may include volatile and nonvolatile, removable and non-removable media implemented in any method or technology for storage of information, such as computer readable instructions, data structures, program modules, or other data. The system memory 504, removable storage 520 and non-removable storage 522 are all examples of computer storage media. Thus, computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 500. Any such computer storage media may be part of the device 500. Computing device 500 may also have input device(s) 524 such as keyboard, mouse, pen, voice input device, and touch input devices. Output device(s) 526 such as a display, speakers, and printer, may also be included. These devices are well know in the art and need not be discussed at length.

The computing device 500 may also contain a communication connection 528 that allow the device to communicate with other computing devices 530, such as over a network. Communication connection(s) 528 is one example of communication media. Communication media may typically be embodied by computer readable instructions, data structures, program modules, or other data in a modulated data signal, such as a carrier wave or other transport mechanism, and includes any information delivery media.

Various modules and techniques may be described herein in the general context of computer-executable instructions, such as program modules, executed by one or more processors, computers, or other devices. Generally, program modules include routines, programs, objects, components, data structures, and so forth for performing particular tasks or implement particular abstract data types. These program modules and the like may be executed as native code or may be downloaded and executed, such as in a virtual machine or other just-in-time compilation execution environment. Typically, the functionality of the program modules may be combined or distributed as desired in various embodiments. An implementation of these modules and techniques may be stored on or transmitted across some form of computer readable media.

As used herein, the term "computer-readable media" can be any available media that can be accessed by the device 500, including computer storage media and communication media. Computer storage media may include both volatile and nonvolatile, removable and non-removable media implemented in any method or technology for storage of information such as computer-readable instructions, data structures, program modules, or other data. Computer storage media includes, but is not limited to, and random access memory (RAM), read only memory (ROM), electrically erasable programmable ROM (EEPROM), flash memory or other memory technology, compact disk ROM (CD-ROM), digital versatile disks (DVD) or other optical disk storage, magnetic cassettes, magnetic tape, magnetic disk storage or other magnetic storage devices, or any other medium, including paper, punch cards and the like, which can be used to store the desired information and which can be accessed by computer 500.

Similarly, communication media typically embodies computer-readable instructions, data structures, program modules or other data in a modulated data signal such as a carrier wave or other transport mechanism and includes any information delivery media. The term "modulated data signal" means a signal that has one or more if its characteristics set or changed in such a manner as to encode information in the signal. By way of example, and not limitation, communication media includes wired media such as a wired network or direct-wired connection and wireless media such as acoustic, RF, infrared and other wireless media. Combinations of any of the above should also be included within the scope of computer readable media.

While specific embodiments of the invention have been illustrated and described herein, as noted above, many changes can be made without departing from the spirit and scope of the invention. Accordingly, the scope of the invention should not be limited by the disclosure of the specific embodiments set forth above. Instead, the invention should be determined entirely by reference to the claims that follow.

## Claims

1. A system for process planning, comprising:
a processing component;
a display operatively coupled to the processing component; and
a memory operatively coupled to the processing component, the memory containing instructions readable by the processing component and configured such that, when executed by the processing component, the processing component:
causes a 3D component definition associated with the selected authoritative 3D CAD model and the associated sub-process of the process plan to be displayed in a 3D definition of the product on the display; and
integrates the process plan into an overall manufacturing plan associated with the manufacturing of the product
receives one or more requirements;
enables at least one of generation and selection of one or more authoritative component models;
enables generation of at least one sub-process associated with the one or more authoritative component models based on the one or more requirements;
enables association of the one or more authoritative component models with the at least one sub-process using at least one product-to-process relationship, the at least one product-to-process relationship being configured such that a variation of the at least one sub-process results in an approximately simultaneous corresponding variation on the one or more authoritative component models;
enables inclusion of at least one of the at least one sub-process and the at least one product-to-process relationship into a process plan; and
displays the one or more authoritative component models in a display in accordance with the at least one product-to-process relationship.

2. The system of Claim 1, wherein the instructions are further configured such that the processing component displays authoritative component models available for selection.

3. The system of Claim 1, wherein the instructions are further configured such that the processing component displays the one or more authoritative component models simultaneously with inclusion of at least one of the at least one sub-process and the at least one product-to-process relationship into a process plan.

4. The system of Claim 1, wherein the instructions are further configured such that the processing component displays the one or more authoritative component models simultaneously with at least one of generation and selection of one or more authoritative component models.

5. The system of Claim 1, wherein the instructions are further configured such that the processing component enables at least one of simulation and performance of the at least one sub-process.

6. The system of Claim 5, wherein the instructions are further configured such that the processing component:
creates adjustment information based on the at least one of simulation and performance of the at least one sub-process; and
enables re-formulation of the at least one sub-process based on the adjustment information.

7. The system of Claim 1, wherein the instructions are further configured such that the processing component:
enables association wherein the at least one product-to-process relationship comprises a database object that persistently and authoritatively relates the at least one sub-process to the one or more authoritative component models.
